(19) Europäisches Patentamt
European Patent Office
Office européen des brevets

(11) Veröffentlichungsnummer: **0 272 536**
**A2**

(12) **EUROPÄISCHE PATENTANMELDUNG**

(21) Anmeldenummer: **87118118.6**

(51) Int. Cl.$^4$: **C08G 18/63**, C08G 81/02

(22) Anmeldetag: **08.12.87**

(30) Priorität: **20.12.86 DE 3643789**

(43) Veröffentlichungstag der Anmeldung:
**29.06.88 Patentblatt 88/26**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Franke, Joachim, Dr.**
**An der Ruthen 2**
**D-5000 Köln 80(DE)**
Erfinder: **Meurer, Kurt Peter, Dr.**
**Am Krahfeld 1**
**D-5330 Königswinter(DE)**
Erfinder: **Haas, Peter, Dr.**
**Zwengenberger Strasse 43**
**D-5657 Haan 1(DE)**
Erfinder: **Witte, Josef, Dr.**
**Haferkamp 10**
**D-5000 Köln 80(DE)**

(54) **Thermoplastisch verarbeitbare, im wesentlichen lineare Poly-Vinylaren/Polyurethan-Block-copolymere, Verfahren zu deren Herstellung und deren Verwendung.**

(57) Neue Poly-Vinylaren/Polyurethan-Blockcopolymere werden hergestellt durch Umsetzung von Polyarylolefinen, die gegenüber Isocyanaten reaktive Gruppen aufweisen, vorzugsweise Polystyrol, mit Di-oder Polyisocyanaten oder Isocyanatprepolymeren, gegebenenfalls höhermolekularer Polyole und/oder niedermolekularer Kettenverlängerer, die sich insbesondere als Polymerdispergatoren zur Herstellung von Polymerblends, als Haftvermittler oder Modifikatoren eignen.

EP 0 272 536 A2

# Thermoplastisch verarbeitbare, im wesentlichen lineare Poly-Vinylaren/Polyurethan-Blockcopolymere, Verfahren zu deren Herstellung und deren Verwendung

Die vorliegende Erfindung betrifft neue, im wesentlichen lineare Poly-Vinylaren/Polyurethan-Blockcopolymere (PVA/PU-Blockcopolymere), erhältlich durch Umsetzung von bi-und gegebenenfalls monofunktionellen Poly-Vinylarenen, die durch anionische Polymerisation hergestellt wurden und gegenüber Isocyanatgruppen oder Isocyanatprepolymeren und gegebenenfalls höhermolekularer Diole und/oder niedermolekularen difunktionellen Kettenverlängerern.

Thermoplastisch verarbeitebare im wesentlichen PVA/PU-Blockcopolymere, vorzugsweise Polystryol/Poylurethan-Blockcopolymere, konnten bisher noch nicht zur Verfügung gestellt werden.

Bekannt sind PVA/PUR-Mischungen. So werden in der GB 1 311 211 feuchtigkeitshärtende PUR-Prepolymere mit Polystryrolharzen vermischt und die Mischungen zur Versiegelung von Betonoberflächen verwendet. Expandierbare Polystyrolperlen können zusammen mit PUR-Rohstoffen unter Erhitzen zu einem Schaumstoff verarbeitet werden, wie das z.B. in der JA 55 107 433 und JA 51 067 560 beschrieben ist.

Zur Verbesserung der Schlagzähigkeit können nach US 4 287 314 und EP 41 347 thermoplastische PUR mit 40 bis 60 % eines Maleinimid/Styrol-Copolymeren abgemischt werden.

Einige Arbeiten wie Ruthkowska, Eisenberg, J. Appl. Polym. Sci. 29 (1984) Nr. 3, S. 755; Nr. 8, S. 313 und 30 (1985) Nr. 8, S. 3317 beschreiben die Mischbarkeit von PUR mit Styrol/Styrolsulfonsäurecopolymeren.

Bei all diesen Mischungen existieren keine festen kovalenten Bindungen zwischen den beiden Komponenten.

Feste Bindungen zwischen Polyurethan-und Polystyrol-Segmenten existieren bei den sogenannten Interpenetrating Polymer Networks. Durch simultanen, voneinander unabhängigen Polymeraufbau werden vernetzte PUR-Systeme und vernetzte Polystyrol-Systeme aufgebaut. Durch die sich gleichzeitig durchdringenden Netzwerke werden die Polymere fest miteinander verbunden, ohne daß kovalente oder ionische Bindungen untereinander existieren. Die Produkte sind nicht mehr thermoplastisch verarbeitbar.

(Literatur z.B.: Frisch, Pure Appl. Chem. 43, (1975) S. 229, Kaplan, Tschoegl, Polym. Eng. Sci., 15, (1975), S. 343
Kim, Polym. Eng. Sci., 15 (1975), S. 339, Kircher, Plast. Eng., 32 (1976), S. 32).

Zu Verbindungen, die feste kovalente Bindungen zwischen PUR-Ketten und Polystyrol-Ketten aufweisen, kommt man entweder durch Pfropfung von Styrol auf Polyurethan mit Hilfe von Radikalbildner wie Azodiisobutyronitril (DOS 2 237 956, US 4 229 924, DOS 3 223 346) oder durch radikalische Copolymerisation von ungesättigten Polyurethanen mit Styrol (US 3 824 201, DOS 2 359 617, US 4 521 546, DOS 2 704 424, Reinf. Plast. 28 (1984), Nr. 8, S. 209 bis 211).

Dabei handelt es sich um radikalisch vernetzte Systeme mit stark uneinheitlicher Molekulargewichtsverteilung, besonders der Polystyrol-Segmente.

Wegen der vernetzten Struktur können diese Produkte nicht thermoplastisch verarbeitet werden und sind deshalb für viele Anwendungen wie z.B. als Haftvermittler und/oder Polymermodifikator nicht geeignet.

Auch durch radikalische Polymerisation hergestellte telechele Styrol-Oligomere mit Amino-und Hydroxy-Endgruppen wurden bereits zur Herstellung von Polystyrol/Polyurethan-Blockcopolymeren verwendet.

Okamoto (Int. Polym. Sci. Technol. 4 (1977), S. 50) beschreibt den Zusatz von Amino-terminierten Styrol-Oligomeren während der one-shot PU-Synthese, wodurch die mechanischen Eigenschaften verbessert werden.

Ähnliche telechele Polymere werden von Konter, Makromol. Chem., 182 (1981), S. 2619 beschrieben. Sie werden als Komponenten in segmentierten und geschäumten PUR eingesetzt.

Durch radikalische Polymerisation hergestellte Polystyrole zeigen nicht nur eine breite Molekulargewichtsverteilung ($M_w \neq M_n$) sondern führen auch zu vernetzten Endprodukten wegen den bei der notwendigen Hydrierung der endständigen Nitrilgruppen sich unerwünscht bildenden funktionellen Gruppen innerhalb der Kette. Es besteht daher die Gefahr, daß bei zu hoher Funktionalität und damit Vernetzung keine thermoplastischen Blockcopolymeren erhalten werden.

Überraschenderweise treten diese Nachteile bei den erfindungsgemäßen PVA/PUR-Blockcopolymeren nicht auf. Man erhält weitgehend lineare Blockcopolymere, wenn zum Aufbau anionisch polymerisierte Vinylare verwendet werden.

Durch diese erfindungsgemäße Ankopplung der normalerweise unverträglichen PVA-und PUR-Systeme werden Polymere erhalten, die direkt als Formteile oder Beschichtungen, vorteilhafter jedoch als Haftvermittler, Kompatibilitätsverbesserer oder insbesondere Dispergatoren verwendet werden können.

Ein Gegenstand der Erfindung sind daher thermoplastisch verarbeitbare, weitgehend lineare Poly-Vinylaren/Polyurethan-Blockcopolymere (PVA/PUR-Blockcopolymere), erhältlich, insbesondere erhalten durch Umsetzung von

1) Poly-Vinylarenen mit einem Molekulargewicht $M_w$ von 1000 bis 350 000, vorzugsweise von 2000 bis 200 000, insbesondere von 2000 bis 100 000, welche durch anionische Polymerisation hergestellt wurden und höchstens zwei gegenüber Isocyanatgruppen reaktionsfähigen Gruppen aufweisen,

2) mit organischen Diisocyanaten, modifizierten Diisocyanaten sowie entsprechenden Isocyanatprepolymeren sowie gegebenenfalls

3) höhermolekularen Diolen, vorzugsweise mit einem Molekulargewicht von 400 bis 5000, sowie gegebenenfalls

4) niedermolekularen, als Kettenverlängerer fungierenden Verbindungen des Molekulargewichts 32 bis 399, vorzugsweise organischen Dihydroxyverbindungen, difunktionellen Aminoalkoholen oder difunktionellen Aminen,

wobei mindestens eine Diol 3) oder ein Kettenverlängerer 4) umgesetzt wird. Die telechelen Poly-Vinylare, vorzugsweise Polystyrole können mit Hilfe der anionischen Polymerisation in getrockneten, aliphatischen oder aromatischen Lösungsmitteln wie z.B. Benzol, Toluol, Cyclohexan, Tetrahydrofuran oder Dioxan hergestellt werden.

Monofunktionelle Poly-vinylare, vorzugsweise Polystyrole mit definierten Molgewichten ($M_w$ = 1000 bis 150 000) und enger Molgewichtsverteilungen (Verhältnis $M_w/M_n$ -1 ≤ 0,1), können mit metallorganischen Initiatoren wie sec.-Butyllithium oder n-Butyllithium hergestellt werden (siehe hierzu M. Morton, L. J. Fetters, Rubber Chem. Technol., 48 (1975), S. 359).

Bekannt ist auch die Carboxylierung der lebenden Polystyrylanionen mit gasförmigem Kohlendioxid, wobei es jedoch schwierig ist, die Bildung dimerer Ketone oder trimerer tertiärer Alkohole zu unterdrücken (siehe hierzu D.P. Wyman, V.R. Allen, T. Altares. J. Polym. Sci., Part A, 2 (1964), S. 4545; P. Mansson, J. Polym. Sci., Polym. Chem. Ed., 18 (1980) S. 1945); DE.P. 15 20 468, Philips Petrol. Comp., 1970 und darin erwähnte Patentliteratur.

Bifunktionelle Polystyrylanionen mit definierten Molgewichten ($M_w$ = 1000 bis 100 000 g/mol) und enger Molgewichtsverteilung sind beschrieben (siehe hierzu F. Bandermann, A.-D. Speikamp. L. Weigel, Makromol. Chem. 186 (1985) S. 2017 bis 2024 sowie US 1 505 460).

Im allgemeinen werden Poly-Vinylaren-mono-bzw. dicarbonsäuren, vorzugsweise Polystyrol-mono-bzw. dicarbonsäuren so hergestellt, daß man Styrol in absolutierter Form (vorgetrocknet über Aluminiumoxid) unter Inertgasatmosphäre in einem Autoklaven, der mit trockenem Cyclohexan/Tetrahydrofuran-Gemisch gefüllt wurde, eintropft.

Bei einer Temperatur von 0°C wird z.B. n-Butyllithium bzw. Naphthalinlithium unter Stickstoff hinzugespritzt. Nach der gewünschten Polymerisationszeit wird die Lösung der lebenden Oligostryrylanionen unter Druck mit trockenem Kohlendioxid behandelt. Nach einer Behandlung mit z.B. Eisessig/Wasser werden die Lösungsmittel unter Wasserstrahlvakuum abdestilliert und die Polystyrol-mono-bzw. dicarbonsäuren in Ethanol gefällt und im Vakuum getrocknet.

Der Carboxylgehalt kann durch Titration mit KOH/Methanol oder durch IR-spektroskopische Analyse bestimmt werden.

Die Molekulargewichte ($M_w$, $M_n$), die chemische und molekulare Einheitlichkeit, eventuelle Langkettenverzweigung werden durch Gelpermeationschromatographie in THF bestimmt.

Die Umsetzung der Poly-Vinylarene, vorzugsweise der Polystyrylverbindung, mit den Isocyanaten erfolgt entweder durch die Carboxyl-, Amin-der OH-Gruppen oder durch das Lithiumsalz der Polystyrylanionen selbst.

Diese Poly-Vinylaren-mono-oder dicarbonsäuren sowie OH, $-NH_2$ terminierten Poly-Vinylarene, sowie Poly-Vinylaren-(di)-anionen können direkt mit Isocyanaten zur Reaktion gebracht werden. Die Herstellung der entsprechenden telechelen Verbindungen ist bekannt (siehe hierzu: R.N. Young, R.P. Quirk und L.J. Fetters "Anionic Polymerizations of Non-Polar Monomers Involving Lithium" in Adv. Polym. Sci. 56, Kap. 15, Seite 70 bis 82 (1984), Springer Verlag Heidelberg; M. Swarc, Adv. Polym. Sci 49 (1983), "Living Polymers and Mechanismus of Anionic Polymerization, Springer Verlag Heidelberg).

Zur Herstellung der telechelen Poly-Vinylarene werden insbesondere Olefine der allgemeinen Formel (I)

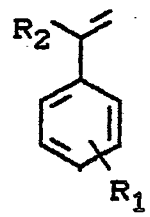

(I)

verwendet, in der

$R_1$ für einen Arylrest mit $C_6$-$C_{10}$, einen Heteroalkylrest mit $C_1$-$C_{10}$ und mit N-, O-und/oder S-Atomen, einen Alkylrest mit $C_1$-$C_4$ oder ein Halogenatom, vorzugsweise Cl, Br oder Wasserstoff,

$R_2$ für einen Alkylrest mit $C_1$-$C_6$ oder Wasserstoff, Heteroalkylrest mit $C_1$-$C_{10}$ und/oder ein N-, O-oder S-Atom oder Wasserstoff steht.

Besonders bevorzugt wird Styrol eingesetzt.

Die oben erwähnten telechelen PARO mit Carboxylendgruppen können auch in Polymere mit anderen gegenüber Isocyanatgruppen reaktive Endgruppen übergeführt werden.

Diese Umwandlung der Carbonsäuregruppen kann entweder direkt durch Oxidation. Reduktion oder Umlagerung in anderen, NCO-reaktiven Gruppen erfolgen oder durch Umsetzung der Carbonsäure-Gruppen mit anderen, nieder-oder höhermolekularen, bifunktionellen Verbindungen der allgemeinen Formel (II)

A-R-B (II),

in der

R für einen aliphatischen Rest mit $C_1$-$C_{20}$, vorzugsweise $C_1$-$C_{10}$, aromatischen Rest mit $C_6$-$C_{20}$, vorzugsweise $C_7$-$C_{30}$, vorzugsweise $C_7$-$C_{20}$,

A eine funktionelle Gruppe, die zu einer Reaktion mit Carbonsäure-Gruppen befähigt ist, vorzugsweise eine Hydroxyl-oder Aminogruppe

B eine funktionelle Gruppe, die zu einer Reaktion mit Isocyanat-Gruppen befähigt ist, vorzugsweise eine Hydroxyl-, Amono-, Thio-und Epoxid-gruppe.

Eine Übersicht findet man z.B. in Houben-Weyl E 4, Seiten 768 bs 784.

Beispiele solcher Verbindungen sind Diole und/oder Aminoalkohole wie Ethylenglykol, Butandiol-1,4, 2,2-Dimethylpropandiol-1,3, Ethanolamin oder Diethanolamin.

Dabei kann es notwendig sein, die Reaktivität der Poly-Vinylaren-Carbonsäure zu erhöhen, z.B. durch Überführung in Carbonsäurehalogenide, bevorzugt in Carbonsäurechloride.

Diese Poly-vinylaren-Carbonsäurechloride können erhalten werden, indem Poly-vinylaren-Carbonsäuren mit einem $M_n$von 1000 bis 350 000 mit Halogenierungsmitteln, vorzugsweise mit Chlorierungsmitteln, z.B. mit Thionylchlorid, gegebenenfalls in einem organischen Lösungsmittel, beispielsweise in aliphatischen, cycloaliphatischen oder aromatischen Lösungsmitteln, umgesetzt werden.

Organische Lösungsmittel, vorzugsweise halogenierte oder alkylierte aromatische Kohlenwasserstoffe wie Toluol oder Chlorbenzol, sind bevorzugt.

Zur Herstellung der erfindungsgemäßen PVA/PUR-Blockcopolymeren werden vorzugsweise zunächst die telechelen Polymeren mit organischen Diisocyanaten 2) zur Reaktion gebracht. Vorzugsweise werden Diisocyanate der allgemeinen Formel $X(NCO)_2$ eingesetzt, wobei X insbesondere einen aliphatischen Kohlenwasserstoffrest mit 4 bis 12 Kohlenstoffatomen, einen cycloaliphatischen Kohlen wasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger besonders bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Methylenbis-cyclohexyldiisocyanat, 4,4'-Diisocyanato-dicyclohexylpropan-(2,2), 1,4-Diisocyanatobenzol, 2,4-Diisocyanatotoluol, 2,6-Diisocyanatotolutol, sowie deren Isomerengemische, 4,4'-Diisocyanato-diphenylmethan, p-Xylylendiisocyanat, sowie $\alpha,\alpha,\alpha',\alpha'$-Tetramethyl-m-oder p-Xylylendiisocyanat oder aus diesen Verbindungen bestehende Gemische.

Es ist selbstverständlich auch möglich, die in der Polyurethanchemie an sich bekannten modifizierten, beispielsweise Carbodiimidgruppen, Allophanatgruppen, Isocyanuratgruppen, Urethangruppen und/oder Biuretgruppen aufweisende Diisocyanate anteilig oder allein (mit)zuverwenden.

Bei den für die Herstellung erfindungsgemäßen PVA/PU-Blockcopolymere als Ausgangsmaterial 3) geeigneten, höhermolekularen gegenüber Isocyanatgruppen reaktiven, Zerewitinoff-aktive Wasserstoffatome enthaltende Diolen handelt es sich um an sich bekannte Synthesebausteine der Polyurethan/Polyharnstoffchemie wie Polyetherdiole, Polyesterdiole, Polycarbonatdiole, Polylactone, Aminogruppen Molgewicht von 400 bis 5000.

Bei den für die erfindungsgemäßen PVA/PU-Blockcopolymere als Ausgangsmaterial 4) geeigneten, als Kettenverlängerer fungierenden Verbindungen, sind insbesondere organische, niedermolekulare Dihydroxyverbindungen mit einem Molekulargewicht von 62 bis 399 einsetzbar.

Es handelt sich hierbei besonders um bifunktionelle Kettenverlängerer des Molekulargewichtsbereichs von 62 bis 399, vorzugsweise 62 bis 250.

Hierzu gehören beispielsweise einfache, difunktionelle Alkohole wie Ethylenglykol, Propylenglykol, Propandiol-(1,3), Butandiol-1,4, Hexandiol-1,6. Auch niedermolekulare Polyesterdiole wie z.B. Adipinsäure-bis-(hydroxyethyl)-ester oder niedermolekulare, Ethergruppen aufweisende Diole wie z.B. Diethylenglykol. Triethylenglykol, Tetraethylenglykol, Dipropylenglykol, Tripropylenglykol oder Tetrapropylenglykol sowie difunktionelle Amine des Molekulargewichtsbereichs von 32 bis 399 als Kettenverlängerer.

Die Verbindungen vom Typ 3) und 4) sind ausführlich in der DE-A 2 832 253, Seiten 11 bis 20 aufgeführt.

Einweiterer Gegenstand der Erfindung sind auch Verfahren zur Herstellung von Poly-$\alpha$-alkylolefin/Polyurethan-Blockcopolymeren, die dadurch gekennzeichnet sind, daß man

1) Poly-Vinylarene mit einem $M_w$ von 1000 bis 350 000 und mit gegenüber Isocyanatgruppen reaktionsfähigen Gruppen mit

2) organischen Diisocyanaten modifizierten Diisocyanaten sowie entsprechenden Isocyanatprepolymeren sowie gegebenenfalls

3) höhermolekularen Diolen vorzugsweise Polyetherdiolen, Polyesterdiolen, Polycarbonatdiolen, Polylactonen, Aminogruppen enthaltenen modifizierten Diolen, vorzugsweise mit einem Molekulargewicht von 400 bis 5000; und mit

4) gegebenenfalls niedermolekularen als Kettenverlängerer fungierenden Verbindungen des Molekulargewichts 32 bis 399, vorzugsweise organischen Dihydroxyverbindungen difunktionelle Aminoalkoholen oder difunktionellen Aminen umsetzt, wobei mindestens ein Diol 3) oder ein Kettenverlängerer 4) umgesetzt wird.

Eine der bevorzugten Ausführungsformen der erfindungsgemäßen Verfahren zur Herstellung von PVA/PU-Blockcopolymeren ist dadurch gekennzeichnet, daß die funktionellen PVA 1) zunächst mit den Diisocyanaten oder mit Isocyanatprepolymeren 2) in der Schmelze oder in Gegenwart eines inerten organischen Lösungsmittels (wie z.B. Aceton, N-Methylpyrrolidon, Toluol, Chlorbenzol, Dichlorbenzol) zu einem noch freie Isocyanatgruppen enthaltende Prepolymere umgesetzt werden, in einer 2. Stufe die restlichen freien NCO-Gruppen ganz oder teilweise mit höhermolekularen Dihydroxyverbindungen 3) und gegebenenfalls in einer 3. Stufe die restlichen freien Isocyanatgruppen mit organischen Dihydroxyverbindungen 4) mit einem Molekulargewicht von 64 bis 399 und/oder aminischen oder hydrazinischen Kettenverlängerungsmitteln des Molekulargewichtsbereichs von 32 bis 399 umgesetzt werden.

Das erfindungsgemäße Verfahren zur Herstellung von PVA/PU-Blockcopolymeren kann auch so ausgeführt werden, daß die Diisocyanate 2) zunächst in der Schmelze oder in Gegenwart eines inerten organischen Lösungsmittels wie z.B. Aceton, N-Methylpyrrolidon, Toluol, Chlorbenzol usw. mit den organischen, höhermolekularen Dihydroxyverbindungen 3) zu einem noch freie NCO-Gruppen enthaltendem Prepolymer umgesetzt werden und in einer 2. Stufe die restlichen freien NCO-Gruppen ganz oder teilweise mit den funktionalisierten PVA und gegebenenfalls in einer 3. Stufe die restlichen freien Isocyanatgruppen mit organischen Dihydroxyverbindungen 4) mit einem Molekulargewicht von 62 bis 399 und/oder aminischen oder hydrazinischen Kettenverlängerungsmitteln vorzugsweise eines Molekulargewichtsbereichs von 32 bis 399 umgesetzt werden.

In dem Verfahren zur Herstellung von PVA/PU-Blockcopolymeren können auch die durch anionische Polymerisation erhaltenen Poly-Vinylarene, vorzugsweise Poly(styrol)-Carbonsäuren in die entsprechenden Carbonsäurehalogenide, bevorzugt Carbonsäurechloride überführt werden und schließlich in der Schmelze oder in einem inerten organischen Lösungsmittel wie z.B. Toluol, mit aliphatischen Diolen, bevorzugt Ethylenglykol, Butandiol oder Hexandiol, zu dem entsprechenden Hydroxyalkyl-Carbonsäureester umgesetzt werden.

Ebenfalls erhält man bevorzugt hydroxyfunktionelle Poly-Vinylaren-Carbonsäurederivate, indem Poly-Vinylaren-Carbonsäureanhydride in einem inerten Lösungsmittel, welches vorzugsweise mit Wasser ein Azeotrop bildet, mit Aminoalkoholen, bevorzugt Ethanolamin, unter azeotroper Entfernung entstehenden Wasser zu den entsprechenden Hydroxyalkyl-Carbonsäurediimiden umgesetzt werden.

Diese hydroxyfunktionellen Poly-Vinylaren-Carbonsäurederivate werden dann in einem inerten Lösungsmittel bei 50 bis 150°C, bevorzugt bei 70 bis 120°C oder in der Schmelze bei 100 bis 200°C, bevorzugt bei 130 bis 170°C, mit Diisocyanaten, bevorzugt Diphenylmethandiisocyanaten, Naphthylendiisocyanat, Toluylendiisocyanat, Isophorondiisocyanat oder Hexamethylendiisocyanat, besonders bevorzugt Diphenylmethan-4,4-diisocyanat, zu NCO-Prepolymeren umgesetzt und anschließend mit einer der vorhandenen NCO-Gruppen etwa äquivalenten Menge eines Kettenverlängerers wie Butandiol, Hexandiol, besonders bevorzugt Butandiol und/oder höhermolekularen Dihydroxylverbindungen 3) umgesetzt.

Die Mischung kann anschließend noch so lange bei der angegebenen Temperatur gehalten werden, bis analytisch kein freies NCO mehr nachweisbar ist.

Die oben erwähnten NCO-Prepolymeren aus den hydroxyfunktionellen PVA-Carbonsäureestern oder -imiden können auch in einem ebenfalls bevorzugten Verfahren zunächst mit höhermolekularen Dihydroxyverbindungen 3), bevorzugt mit Polyesterdiolen, $C_3$-oder $C_4$-Polyetherdiolen mit einem Molekulargewicht von 1000 bis 3000 in einem Unterschu umgesetzt werden, daß nach Beendigung dieser Reaktion noch freie Isocyanatgruppen in der Mischung vorhanden sind. Diese werden dann, wie oben beschrieben, mit einer etwa äquivalenten Menge eines Kettenverlängerers in Reaktion gebracht. Bei den bevorzugt verwendeten Polyesterdiolen handelt es sich um solche aliphatischen oder aliphatisch-aromatisch linearen Polyestern aus Dicarbonsäuren und Diolen, wie sie z.B. für thermoplastische Polyurethane üblicherweise verwendet werden.

Bevorzugt ist weiterhin ein Verfahren zur Herstellung von PVA-NCO-Prepolymeren, indem die PVA-Carbonsäuren oder -Anhydride (bevorzugt Polystyrol-Carbonsäure oder -Anhydride), direkt in einem hochsiedenden Lösungsmittel oder bevorzugt in der Schmelze bei einer Temperatur, die oberhalb der PVA-bevorzugt Polystyrol-Carbonsäure (also >150° C) aber, um unerwünschte Nebenreaktionen zu verhindern, nicht wesentlich über dem Schmelzpunkt, also unter etwa 180° C, mit aromatischen oder aliphatischen Diisocyanaten, bevorzugt Diphenylmethandiisocyanat oder Toluylendiisocyanat oder ihren NCO-Prepolymeren, in Reaktion gebracht werden. Bei der Reaktion entstehen unter $CO_2$-Austritt Amidbindungen des Polystyrol-Restes and das Diisocyanat.

Nach Beendigung der $CO_2$-Entwicklung kann nach einem der beiden oben erwähnten Varianten weiter verfahren werden. Der besondere Vorteil dieser Reaktionsführung liegt in der Einfachheit der Durchführung und in der Einsparung der vorgeschalteten Stufen zur Herstellung der hydroxyfunktionellen PVA (bevorzugt PS)-Carbonsäureester oder -imide.

Man erhält mit dem erfindungsgemäßen Verfahren weiße bis leicht gelbliche kristalline oder amorphe Feststoffe, die bei ca. 150 bis 200° C unzersetzt schmelzen. Thermoanalytische Untersuchungen zeigen das Vorhandensein von nicht gestörten Kristallisationen der PVA-und PU-Segmente. In die IR-Spektroskopie erkennt man sowohl die Signale für PVA als auch die charakteristischen Absorptionsbanden für Urethan-und Amid-Bindungen. Nach der Methode der entmischenden Flüssigkeiten (Zitat: R. Kuhn, Makromol. Chem. 181 (1980), S. 725) läßt sich der Anteil an Blockcopolymerisaten exakt feststellen.

Die Umsetzungen erfolgen bei einer Temperatur von 20 bis 200°C, bevorzugt von 50 bis 150°C.

Die üblichen, für Isocyanat-Reaktionen bekannten Katalysatoren können gegebenenfalls in Mengen von 0,1 bis 10 % bezogen auf die Gesamtmenge der Monomeren zugegeben werden.

Die Beendigung der Reaktion kann festgestellt werden, indem sich analytisch (IR) keine freien Isocyanatgruppen mehr nachweisen lassen.

Die Isolierung der gegebenenfalls gelösten PVA/PU-Blockcopolymeren erfolgt nach bekannten Verfahren, wie z.B. Entfernung des Lösungsmittels, vorzugsweise unter Anwendung von Vakuum bei erhöhten Temperaturen oder durch Fällen aus der Lösung durch Zugabe von einem Lösungsmittel oder in einem Lösungsmittel, in dem das Polymer unlöslich ist.

Zur Vervollständigung der Reaktion und zur Verbesserung der mechanischen Eigenschaften kann es sinnvoll sein, die erfindungsgemäßen PVA/PU-Blockcopolymeren bei einer Temperatur von 50 bis 150°C, vorzugsweise von 70 bis 120°C für eine Zeit von 0,1 bis 24 Stunden, vorzugsweise von 1 bis 5 Stunden zu tempern.

Die erfindungsgemäß erhältlichen PVA/PU-Blockcopolymere lassen sich nach Reinigung und Trocknung sowie gegebenenfalls einer Temperung in den üblichen Mischaggregaten wie Walzen, Knetern, Ein-und Mehrwellenextrudern sowie Bambary zu Formkörpern verarbeiten.

Die Verarbeitungstemperatur sollte 250°C nicht überschreiten.

Die erfindungsgemäßen PVA/PU-Blockcopolymeren können auch in beliebigem Verhältnis mit thermoplastischen Polyurethanen und/oder isotaktischen und/oder ataktischem Polystyrol gemischt werden.

Hier können die erfindungsgemäßen PVA/PU-blockcopolymere eine besonders interessante technische Verwendung, beispielsweise als Haftvermittler, Kompatibilitätsverbesserer oder Dispergatoren in ansonsten unverträglichen oder schlecht verträglichen thermoplastischen Polymermischungen, wie z.B. Polystyrol/thermoplastische Polyurethanelastomer-Blends finden. Diese Verwendungen sind ein weiterer Gegenstand der Erfindung.

Der technologische Fortschritt, der sich durch die Verwendung der erfindungsgemäßen PVA/PU-Blockcopolymeren erreichen läßt, kann u.a. durch Messung der Torsionstrennfestigkeit zwischen Polystyrol- und Polyurethan-Haftschicht zwischen diesen Platten nur eine Mischung aus Polystyrol (PS) und PU, so

erhält man nur eine geringe Torsionstrennfestigkeit. Bei Zusatz von 10 % der erfindungsgemäßen PVA/PU-Blockcopolymeren in die Haftschicht erhöht sich die Torsionstrennfestigkeit erheblich.

Die Wirkung der erfindungsgemäßen PVA/PU-Blockcopolymeren als Polymerdispergator kann auch durch licht mikroskopische Betrachtung von PS/PU-Blends nachgewiesen werden. Während bei diesen Blends ohne Verwendung von Polymerdispergatoren eine unregelmäßige, aus mehr oder weniger großen Einheiten bestehende Verteilung beobachtet wird, läßt sich durch Zusatz von 10 % der erfindungsgemäßen PVA/PU-Blockcopolymeren eine Vereinheitlichtung und Verkleinerung der Phasen feststellen.

## Beispiele

I. Allgemeine Versuchsvorschrift zur Herstellung carboxymonofunktioneller Polystyrylcarbonsäuren

a) Beispiel einer Rezeptur (MG = 2000)

Autoklav 40 l; $N_2$; RT

| | | |
|---|---|---|
| Cyclohexan | [ml] | 18000 ($H_2O$-Gehalt <2 ppm) |
| Styrol | [ml/g/mol] | 1584/1440/13,8 |
| THF | [ml] | 1500 ($H_2O$-Gehalt <2 ppm) |
| Temperatur | [°C] | 0 |
| Butyl Li | [ml/mmol] | 276,8/692 (verdünnt mit 500 ml Cyclohexan) |
| Reaktionszeit | [h] | 2 |
| $CO_2$ | [bar] | 10 (Autoklav) |
| Reaktionszeit mit $CO_2$ | [min] | 15 |
| $CH_2COOH/H_2O$ | [ml/ml] | 500/1000 |

b) Beispiel einer Rezeptur (MG = 5000)

Autoklav 40 l; $N_2$; RT

| | | |
|---|---|---|
| Cyclohexan | [ml] | 18000 ($H_2O$-Gehalt <2 ppm) |
| Styrol | [ml/g/mol] | 1584/1440/13,8 |
| THF | [ml] | 1500 ($H_2O$-Gehalt <2 ppm) |
| Temperatur | [°C] | 0 |
| BuLi | [ml/mmol] | 115,2/288 |
| Reaktionszeit | [h] | 2 |
| $CO_2$ | [bar] | 10 (Autoklav) |
| Reaktionszeit mit $CO_2$ | [min] | 15 |
| $CH_2COOH/H_2O$ | [ml/ml] | 240/500 |

c) Beispiel einer Rezeptur (MG = 10 000)

Autoklav 40 l; $N_2$; RT

| | | |
|---|---|---|
| Cyclohexan | [ml] | 18000 ($H_2O$-Gehalt < 2 ppm) |
| Styrol | [ml/g/mol] | 1584/1440/13,8 |
| THF | [ml] | 1500 ($H_2O$-Gehalt < 2 ppm) |
| Temperatur | [° C] | 0 |
| BuLi | [ml/mmol] | 57,6/144 |
| Reaktionszeit | [h] | 2 |
| $CO_2$ | [bar] | 10 (Autoklav) |
| Reaktionszeit mit $CO_2$ | [min] | 15 |
| $CH_2COOH/H_2O$ | [ml/ml] | 120/500 |

II. Allgemeine Versuchsvorschrift zur Herstellung carboxydifunktioneller Polystyrylcarbonsäuren

Beispiel einer Rezeptur (bifunktionell), (MG = 14 000)

Kolben 0,5 l; $N_2$; RT

| | | |
|---|---|---|
| THF | [ml] | 300 |
| α-Methylstyrol | [ml/g/Mol) | 60/54,8/0,463 |
| Temperatur | [° C] | -40 |
| Na-naphthenat | [ml/mmol] | 17/4 |
| Reaktionszeit | [h] | 1 |
| $CO_2$-Einheiten | [min] | 10 |
| Reaktionszeit mit $CO_2$ | [min] | 30 |
| 0,2 n HCl | [ml] | 100 |

III. Herstellung der hydroxyfunktionellen Polystyryl-Carbonsäureester

100 g der monofunktionellen Polystyrol-Carbonsäure nach Ia) wird in 200 ml abs. Toluol gelöst und mit 20 g (Überschuß) Thionychlorid 2 Stdn. refluxiert. Anschließend wird unverbrauchtes Thionylchlorid im Vakuum abdestilliert. Die ebenfalls mitentfernte Toluol-Menge wird zugegeben und das Säurechlorid mit 20 g Ethylenglykol (Überschuß) versetzt. Nach weiteren 3 Stdn. bei Rückfluß wird das Produkt in einem Überschuß Methanol gefällt, mit Methanol gewaschen und getrocknet.

Beispiel 1 PS/PU-Blockcopolymere

105 g des hydrofunktionellen Polystyrolcarbonsäureesters nach III) wird in 308 g Toluol gelöst und mit 17,4 g Diphenylmethandiisocyanat (MDI) umgesetzt. Nach 2 Stdn. wird bei 80° C langsam die stöchiometrische Menge butandiol-1,4 langsam zugegeben und 12 Stdn. bei 80° C weiter gerührt bis kein freies Isocyanat mehr nachweisbar war. Das Produkt wurde in Methanol gefällt, abgesaugt, gewaschen und getrocknet.

Beispiel 2

105 g des hydroxyfunktionellen PS-Carbonsäureesters nach III) wird in 300 g Toluol gelöst und mit 17,4 g Toluylendiisocyanat (Toluylen-2,4-diisocyanat) umgesetzt. Nach 2 Stunden wird bei 80° C langsam die Hälfte der stöchiometrisch dem Gehalt an freien Isocyanatgruppen entsprechende Menge (50 g) eines Polyesterdiols aus Adipinsäure und Hexandiol (OH-Zahl 56, Molekulargewicht 2000) zugegeben. Nach 2 Stunden bei 80° C wird langsam die dem Rest an freien Isocyanatgruppen entsprechende Menge (3 g) Hexandiol-1,6 langsam zugegeben und 12 Stunden bei 80° C weitergerührt bis kein freies Isocyanat mehr nachweisbar ist. Das Produkt wird in Methanol gefällt, abgesaugt, gewaschen und getrocknet.

Beispiel 3

700 g der Polystyrolcarbonsäure nach II) mit einer Säurezahl von 56 werden unter Stickstoff bei 150° C geschmolzen. Dann wird langsam bei dieser Temperatur 37,5 g MDI zugegeben. Man beobachtet eine Gasentwicklung ($CO_2$), die nach ca. 15 min. wieder abklingt. Nach weiteren 30 min. werden 112 g eines Polyesterdiols aus Adipinsäure und Butandiol (OH-Zahl 50, mg KOH/g Substanz) zugegeben und witere 2 Stdn. bei 150° C gerührt. Anschließend werden zu diesem Polystyrol-Blöcke enthaltenden NCO-Prepolymer 4,5 g Butandiol gegeben, rasch verrührt und die Mischung in eine Teflon-Wanne gegossen und anschließend bei 80° C 2 Stdn. getempert.

Beispiel 4

Abmischung der PS/PU-Blockcopolymeren mit Polystyrol mit einem Molekulargewicht von 290 000 und/oder einem thermoplastischen PU (Desmopan® Bayer AG Leverkusen)

Die Mischungen wurden in einem Plastographen unter folgenden Bedingungen hergestellt:

Temperatur = 240°C (±5°C)
Menge = 50 g
Kompoundierzeit = 15 Min.
U/min = 25

Die fertig kompoundierten Probem werden mit einem Spatel in noch heißem, weichen Zustand abgenommen und 1 Std. bei 130°C im Vakuum getrocknet.

Diese Proben werden zur Messung der Torsionstrennfestigkeit nach benutzt.

Dabei werden Sandwichproben aus PU (Desmopan 359 der Bayer AG) und Polystyrol mit einer Zwischenfolie durch 15 minütiges Verpressen bei 240° in einer Heizpresse hergestellt. Wenn für die Zwischenfolie eine Mischung aus einem Polyurethanpolystyrolblockcopolymer mit 59 Gew.-% Polystyrolsegmenten und 41 Gew.-% Polyurethan-segmente nach Beispiel 2 verwendet wird, so wird eine Trennfestigkeit von 16 mPa festgestellt. wird ein Blockcopolymer aus PU/PS mit 6 Gew.-% PS als Zwischenfolie verwendet, so wird eine Trennfestigkeit von 14 mPa gemessen. Schließlich wird bei Einsatz eines PU/PS-Blockcopolymers mit 92 Gew.-% Polystyrol eine Trennfestigkeit von 13 mPa erreicht. Besteht die Zwischenfolie nur aus einem PU/PS-Blend im Gew.-Verhältnis 1:1, so wird nur eine Trennfestigkeit von 8 mPa gemessen.

## Ansprüche

1. Thermoplastisch verarbeitbare, weitgehend lineare Poly-vinylaren/Polyurethan-Blockcopolymere (PVA/PUR-Blockcopolymere), erhältlich durch Umsetzung von

1) Poly-vinylaren mit einem Molekulargewicht Mvon 1000 bis 350 000, welche durch anionische Polymerisation hergestellt wurden und höchstens zwei gegenüber Isocyanatgruppen reaktionsfähigen Gruppen aufweisen,

2) mit organischen Diisocyanaten, modifizierten Diisocyanaten sowie entsprechenden Isocyanatprepolymeren, sowie gegebenenfalls

3) höhermolekularen Diolen,

sowie gegebenenfalls

4) niedermolekularen, als Kettenverlängerer fungierenden Verbindungen mit dem Molekulargewichts 32 bis 399, vorzugsweise organischen Dihydroxyverbindungen, difunktionellen Aminoalkoholen oder difunktionellen Aminen,

wobei mindestens ein Diol 3) oder ein Kettenverlängerer 4) umgesetzt wird.

2. Blockcopolymere nach Anspruch 1, dadurch gekennzeichnet, daß als Poly-vinylaren Polystyrol eingesetzt wird.

Verfahren zur Herstellung von Poly-Vinylaren/Polyurethan-Blockcopolymeren nach Anspruch 1 oder 2, dadurch gekennzeichnet, daß man

1) Poly-Vinylarene mit einem M $_w$ von 1000 bis 350 000, die durch anionische Polymerisation erhalten wurden und mit gegenüber Isocyanatgruppen reaktionsfähigen Gruppen aufweisen,

2) mit organischen Diisocyanaten modifizierten Diisocyanaten sowie entsprechenden Isocyanatprepolymeren sowie gegebenenfalls

3) höhermolekularen Diolen und mit

4) gegebenenfalls niedermolekularen als Kettenverlängerer fungierenden Verbindungen des Molekulargewichts 32 bis 399, vorzugsweise organischen Dihydroxyverbindungen oder difunktionellen Aminen umsetzt, wobei mindestens ein Diol 3) oder ein Kettenverlängerer 4) umgesetzt wird.

4. Verwendung der Blockcopolymere nach Anspruch 1 oder 2 als Haftvermittler, Kompatibilitätsverbesserer oder Dispergatoren in unverträglichen oder schlecht verträglichen thermoplastischen Polymermischungen, vorzugsweise Polystyrol/thermoplastische Polyurethanelastomer-Legierungen.